# EUROPÄISCHE PATENTSCHRIFT

(11) **EP 3 577 359 B1**
(45) Veröffentlichungstag und Bekanntmachung des Hinweises auf die Patenterteilung: **07.06.2023**
(21) Anmeldenummer: 18702120.9
(22) Anmeldetag: 15.01.2018
(51) Int. Cl.: F16C 33/20

(54) **LAUFWERK FÜR EIN SCHIENENFAHRZEUG UND LAGERELEMENT FÜR EIN LAUFWERK**
RUNNING GEAR FOR A RAIL VEHICLE, AND BEARING ELEMENT FOR A RUNNING GEAR
TRAIN DE ROULEMENT POUR VÉHICULE FERROVIAIRE ET ÉLÉMENT PALIER POUR TRAIN DE ROULEMENT

(30) Priorität: 02.02.2017 DE 202017100568 U
(43) Veröffentlichungstag der Anmeldung: 11.12.2019
(73) Patentinhaber: Faiveley Transport Witten GmbH, 58454 Witten (DE)
(72) Erfinder: MONTUA, Sebastian, 34233 Fuldatal (DE)
(74) Vertreter: RGTH
(86) Internationale Anmeldenummer: PCT/EP2018/050873
(87) Internationale Veröffentlichungsnummer: WO 2018/141538

(56) Entgegenhaltungen:
- EP-A1- 2 940 339
- WO-A1-2010/046174
- DE-A1- 19 844 507
- DE-B- 1 155 253
- US-A- 2 861 654
- US-A- 5 286 014

## Beschreibung

Die vorliegende Erfindung betrifft ein Laufwerk für ein Schienenfahrzeug umfassend ein Drehgestell und ein Bremsgestänge, mit mindestens einem Lagerelement, wobei das Bremsgestänge mittels des mindestens einen Lagerelementes an dem Drehgestell gelagert ist und/oder mit dem Drehgestell verbunden ist. Ferner betrifft die vorliegende Erfindung ein Lagerelement für ein Laufwerk eines Schienenfahrzeuges.

### Stand der Technik

Laufwerke von Schienenfahrzeugen umfassen in der Regel ein Drehgestell und ein Bremsgestänge. Das Bremsgestänge kann ferner eine sogenannte Bremsbrücke aufweisen. Das Bremsgestänge, insbesondere die Bremsbrücke, ist an dem Drehgestell gelagert. Hierfür kann das Drehgestell einen Adapter aufweisen, welcher als Bindeglied zwischen dem Bremsgestänge beziehungsweise der Bremsbrücke und dem Drehgestell angeordnet ist. Ferner kann eine Hängelasche vorgesehen sein, mit welcher das Bremsgestänge, insbesondere die Bremsbrücke, mit dem Drehgestell verbunden und an dem Drehgestell gelagert ist.

Bei Laufwerken von Schienenfahrzeugen treten hohe mechanische und elektrische Spannungen auf. Zudem ist im Betrieb mit einer starken Vibrationsbelastung zu rechnen. So können beispielsweise die elektrischen Spannungen, welche zwischen dem Drehgestell und der Bremsbrücke beziehungsweise dem Bremsgestänge aufgebaut werden, weit über 10 kV bis 100 kV betragen. Aufgrund des hohen Gewichtes des Drehgestells sowie der Aufbauten des Schienenfahrzeuges können Kräfte von 100 kN und mehr auf die Verbindungselemente oder Lagerelemente zwischen Drehgestell und Bremsgestänge wirken. Die starken Vibrationen sorgen zudem für eine schnelle Alterung der Verbindungen und Lagerungen zwischen Drehgestell und Bremsgestänge, sodass kurze und häufige Wartungs- und Inspektionsintervalle eingehalten werden müssen.

Aus der DE 198 44 507 A1 ist eine Bremsanordnung für Schienenfahrzeuge bekannt, bei der die Bremsbrücke über ein elastisches Gelenklager an einem Drehgestell sphärisch befestigt ist, und wobei das elastische Gelenklager eine Gummimanschette aufweist.

Aus der DE 102 41 755 A1 ist ein Güterwagendrehgestell mit verminderter Lärmemission bekannt, wobei zur Lärmreduktion Lagerbuchsen in Bolzen-Buchsen-Gelenkverbindungen der Bremsgestänge verwendet werden.

Die DE 44 25 598 C1 offenbart eine Vorrichtung für die automatische Bremskraftermittlung im Stillstand oder während der Fahrt an Bremsscheiben von Schienenfahrzeugen, wobei eine Bremsbrücke über eine Hängelasche mit einem Wagenrahmen verbunden ist.

Die WO 2010/046174 A1 offenbart eine Scheibenbremse für ein Schienenfahrzeug, umfassend eine Bremsscheibe, eine die Bremsscheibe umgreifende Bremszange, welche im Betätigungsfall mittels eines Bremshebels einen auf einem Bremsbelaghalter angeordneten Bremsbelag gegen die Bremsscheibe drückt, wobei der Bremshebel und der Bremsbelaghalter mittels einer Gelenkverbindung verbunden sind, wobei der Bremshebel und der Bremsbelaghalter voneinander elektrisch isoliert ausgeführt sind.

Aus der US 5,286,014 A ist eine Gleitbuchse mit verbesserter Axiallastkapazität bekannt. Die Lagerbuchse umfasst ein thermoplastisches Material wie Nylon, Polypropylen, Polyester, Polyphenylensulfid mit oder ohne Faserverstärkung.

Die DE 1 155 253 A offenbart ein Verfahren zur Herstellung eines Verbundwerkstoffes aus metallischen und nichtmetallischen Komponenten zur Verwendung als Gleit- oder Reibwerkstoff, bei dem eine poröse Schicht mit einem die Gleit- bzw. Reibfläche bildenden Kunststoff ausgefüllt ist. Als Kunststoff kann ein Polyoxymethylen verwendet werden.

Zudem sind im Stand der Technik Gummi-Metalllager zur Lagerung eines Bremsgestänges an einem Drehgestell bekannt.

### Darstellung der Erfindung: Aufgabe, Lösung, Vorteile

Der vorliegenden Erfindung liegt die Aufgabe zugrunde, ein Laufwerk mit einer Lagerung eines Bremsgestänges an einem Drehgestell bereitzustellen, wobei die Lagerung langlebig und wartungsarm ist, wobei die Übertragung von Schocks und Vibrationen zwischen dem Bremsgestänge und dem Drehgestell reduziert wird und wobei Drehgestell und Bremsgestänge elektrisch voneinander isoliert sind. Ferner liegt der Erfindung die Aufgabe zugrunde, ein Lagerelement für ein Laufwerk für ein Schienenfahrzeug bereitzustellen.

Zur Lösung der Aufgabe wird ein Laufwerk für ein Schienenfahrzeug umfassend ein Drehgestell und ein Bremsgestänge vorgeschlagen, mit mindestens einem Lagerelement, wobei das Bremsgestänge eine Bremsbrücke umfasst, wobei die Bremsbrücke mittels des mindestens einen Lagerelements an dem Drehgestell gelagert ist und/oder mit dem Drehgestell verbunden ist, wobei ferner das mindestens eine Lagerelement aus einem Kunststoff besteht, wobei der Kunststoff Polyoxymethylen (POM) ist und/oder wobei der Kunststoff ein selbstschmierender Kunststoff ist.

Das Drehgestell kann einen Adapter und/oder eine Hängelasche zur Lagerung der Bremsbrücke aufweisen. Das Bremsgestänge umfasst die Bremsbrücke, wobei die Lagerung des Bremsgestänges mit dem Drehgestell über die Bremsbrücke stattfindet.

Polyoxymethylen (POM) ist ein hochmolekularer thermoplastischer Kunststoff und zeichnet sich durch hohe Festigkeit, Härte und Steifigkeit in einem weiten Temperaturbereich aus. Vorteilhafterweise behält er seine hohe Zähigkeit bis -40°, weist zudem eine hohe Abriebfestigkeit und einen niedrigen Reibungskoeffizienten auf. Darüber hinaus ist Polyoxymethylen hoch wärmeformbeständig und hat auch gute Gleiteigenschaften sowie gute elektrische und dielektrische Eigenschaften. Zudem zeichnet sich Polyoxymethylen durch eine geringe Wasseraufnahme aus, sodass Gebrauchstemperaturen von -40° bis 130° möglich sind. POM kann mit selbstschmierenden Kunststoffen kombiniert werden.

Durch die vorteilhafte Verwendung eines aus einem, bevorzugt nicht vulkanisierten, Kunststoff, insbesondere aus einem Hartkunststoff, bestehenden Lagerelements kann eine Lagerung eines Bremsgestänges an einem Drehgestell bereitgestellt werden, welche eine gute elektrische Isolation zwischen Bremsgestänge und Drehgestell aufweist.

Versuche der Anmelderin haben überraschenderweise gezeigt, dass mit einem Lagerelement aus Kunststoff auch eine Übertragung der Bremskräfte ins Drehgestell vorteilhaft beeinflusst wird. Ferner wird eine Reduktion von Schocks und Vibrationen in einem Maße ermöglicht, welches der Leistung bekannter Gummi-Metalllager für die Lagerung von Bremsgestängen entspricht.

Bevorzugt ist das Lagerelement kein Gummi-Metalllager. Weiter bevorzugt ist zur Lagerung des Bremsgestänges an dem Drehgestell kein Gummi-Metalllager vorgesehen.

Das Lagerelement bestehend aus einem Kunststoff in einem Laufwerk eines Schienenfahrzeuges kann als genereller Ersatz von Gummi-Metalllagern in Bremsgestängen mit und ohne Hängelasche verwendet werden. Insbesondere eignet sich das elektrisch isolierende, aus einem Kunststoff bestehende Lagerelement zur Lagerung eines Bolzens für die Verbindung einer Bremsbrücke mit einem Adapter oder für die Verbindung einer Bremsbrücke mit einem Drehgestell und/oder mit einer Hängelasche.

Mit besonderem Vorteil und überraschenderweise zeigten Lebensdauertests eine wesentliche höhere Lebensdauer von aus einem Kunststoff bestehenden Lagerelementen in einem Laufwerk für ein Schienenfahrzeug im Vergleich zu bekannten Gummi-Metalllagern.

Bevorzugt kann vorgesehen sein, dass das mindestens eine Lagerelement eine Lagerbuchse ist, wobei das Lagerelement in dem Bremsgestänge, bevorzugt in einem Loch, insbesondere in einer Bohrung, des Bremsgestänges, angeordnet ist.

Durch die Ausbildung des Lagerelementes als Lagerbuchse und Anordnung des Lagerelementes in einem Loch des Bremsgestänges kann das Lagerelement leicht zur Lagerung eines Bremsgestänges an einem Drehgestell eines Schienenfahrzeuges verwendet werden ohne dass weitere Modifikationen an dem Bremsgestänge oder dem Drehgestell vorgenommen werden müssen.

Weiter bevorzugt kann vorgesehen sein, dass ein Lagermittel, insbesondere ein Bolzen, an dem Drehgestell angeordnet ist und/oder mit dem Drehgestell verbunden ist, und dass das Lagermittel in dem Lagerelement gelagert ist.

Zur Lagerung oder Aufhängung des Bremsgestänges, insbesondere einer Bremsbrücke, sind somit an dem Drehgestell, bevorzugt an einem Adapter des Drehgestells und/oder an einer Hängelasche des Drehgestells Lagermittel, insbesondere Bolzen, angeordnet, welche weiter bevorzugt in dem Lagerelement gelagert bzw. angeordnet sind. Hierdurch wird eine Verbindung und Lagerung eines Bremsgestänges mit dem Drehgestell bereitgestellt.

Weiter bevorzugt kann vorgesehen sein, dass das mindestens eine Lagerelement in der Bremsbrücke, bevorzugt in einem Loch, insbesondere in einer Bohrung, der Bremsbrücke, angeordnet ist.

Durch Lagerung des Bremsgestänges über die Bremsbrücke des Bremsgestänges wird eine effektive und stabile Lagerung erreicht. Das Bremsgestänge kann über die Bremsbrücke an dem Drehgestell gelagert sein. Die Lagerung kann ausschließlich über die Bremsbrücke erfolgen, jedoch ist es auch möglich, dass das Bremsgestänge, insbesondere die Bremsbrücke, über weitere Lagerungen, beispielsweise über eine Hängelasche, an dem Drehgestell gelagert ist. Ist eine weitere Lagerung, beispielsweise über eine Hängelasche vorgesehen, so kann dort ebenfalls ein einen Kunststoff aufweisendes und/oder ein aus einem Kunststoff bestehendes Lagerelement verwendet werden. Insbesondere kann eine weitere oder zusätzliche Lagerung des Bremsgestänges mit dem Drehgestell auch über die Bremshebel und/oder die Bremsbelaghalter erfolgen.

Bevorzugt kann vorgesehen sein, dass das Drehgestell einen Adapter und/oder eine Hängelasche umfasst, wobei das Bremsgestänge, insbesondere die Bremsbrücke, an dem Adapter und/oder an der Hängelasche durch das Lagerelement gelagert ist.

Besonders bevorzugt ist somit die Bremsbrücke entweder über einen dafür vorgesehenen Adapter und/oder über eine Hängelasche an dem Drehgestell befestigt und gelagert. Dafür weist die Bremsbrücke bevorzugt ein Loch, besonders bevorzugt eine Bohrung, auf, in dem das Lagerelement angeordnet ist. An dem Adapter und/oder der Hängelasche sind Lagermittel, insbesondere Bolzen, angeordnet und/oder befestigt, und die Lagermittel, insbesondere der oder die Bolzen, sind wiederum in dem Lagerelement angeordnet. Für die Anordnung der Lagermittel an dem Adapter und/oder an der Hängelasche können an dem Adapter und/oder an der Hängelasche weitere Lageraufnahmen vorgesehen sein, in denen weitere Lagerelemente angeordnet sind. Die Lagermittel, insbesondere der oder die Bolzen, sind, insbesondere endseitig, in der Hängelasche und/oder dem Adapter, bevorzugt in den in der Hängelasche oder dem Adapter angeordneten Lagerelementen, angeordnet. Die Hängelasche und/oder der Adapter sind mit dem Drehgestell verbunden bzw. Teil des Drehgestells. Somit erfolgt durch die Elemente Bremsbrücke, Loch, Lagerelement, Bolzen, Hängelasche und/oder Adapter und Drehgestell eine Lagerung der Bremsbrücke mit dem Drehgestell.

Zudem kann vorgesehen sein, dass mindestens ein Lagerelement auch in einer Lageraufnahme des Adapters und/oder der Hängelasche angeordnet ist, so das auch eine Lageraufnahme der Hängelasche beziehungsweise des Adapters ein Lagerelement umfasst, wobei das Lagerelement einen Kunststoff aufweist und/oder aus einem Kunststoff besteht.

Weiter bevorzugt ist vorgesehen, dass das Drehgestell von dem Bremsgestänge mittels des mindestens einen Lagerelementes elektrisch isoliert ist, wobei das Lagerelement bevorzugt eine Durchschlagsfestigkeit von mindestens 20 kV, weiter bevorzugt von mindestens 40 kV, insbesondere bevorzugt von mindestens 50 kV, weiter insbesondere bevorzugt von mindestens 60 kV, noch weiter bevorzugt von mindestens 80 kV, ganz besonders bevorzugt von mindestens 100 kV, aufweist.

Ferner kann bevorzugt vorgesehen sein, dass das Lagerelement eine Durchschlagsfestigkeit von 20 kV bis 200 kV, bevorzugt von 50 kV bis 150 kV, insbesondere bevorzugt von 80 kV bis 120 kV, ganz besonders bevorzugt von 100 kV, aufweist.

Die Durchschlagsfestigkeit kann absolut sein oder pro Millimeter Materialdicke des Lagerelementes bestimmt werden. Die hohen Durchschlagsfestigkeiten bevorteilen eine gute elektrische Isolation des Bremsgestänges gegenüber dem Drehgestell.

Ferner kann der elektrische Widerstand des Lagerelementes bevorzugt größer oder gleich 2 kΩ sein, besonders bevorzugt gemessen bei einer 50 V-Prüfspannung nach einer Stoßspannung von 2,5 kV im Mikrosekundenbereich.

Weiter bevorzugt kann das Lagerelement in dem Bremsgestänge, und/oder in dem Loch des Bremsgestänges, insbesondere der Bremsbrücke, und/oder der Lageraufnahme des Adapters und/oder der Hängelasche durch Einpressen eines Lagermittels wie eines Bolzens mit dem Lagerelement angeordnet werden.

Ferner ist es auch möglich, dass ein Metallteil oder ein Gummiteil eines bekannten Gummi-Metalllagers durch ein Lagerelement, welches einen Kunststoff aufweist oder aus Kunststoff besteht, ersetzt wird.

Weiter bevorzugt kann das Lagerelement des Laufwerks für ein Schienenfahrzeug mit einem Drehverfahren hergestellt sein. Ferner ist es auch möglich, dass das Lagerelement mittels eines Strangpressverfahrens hergestellt wird.

Mit weiterem Vorteil kann vorgesehen sein, dass das Drehgestell gegenüber dem Bremsgestänge mittels des mindestens einen Lagerelements vibrationsgedämpft ist, wobei bevorzugt eine Lagereigenschaft des mindestens einen Lagerelements derart ausgebildet ist, dass bei einer Lebensdauerprüfung nach DIN EN 61 373 eine Beschleunigungsdichteantwort des, insbesondere mit dem Lagerelement gelagerten, Bremsgestänges über mindestens 50%, bevorzugt mindestens 60%, weiter bevorzugt mindestens 80%, insbesondere bevorzugt mindestens 90%, des Frequenzbereichs von 10 Hz bis 100 Hz unterhalb von 20.000 (m/s²)²/Hz, bevorzugt unterhalb von 10.000 (m/s²)²/Hz, insbesondere bevorzugt unterhalb von 9.000 (m/s²)²/Hz liegt.

Zur Bestimmung der Lagereigenschaft des mindestens einen Lagerelementes kann ein Bremsgestänge mit einer Bremsbrücke, wobei in der Bremsbrücke Löcher oder Bohrungen vorhanden sind, in denen das Lagerelement angeordnet ist, in eine entsprechende Prüfvorrichtung eingesetzt werden. Bei der Lebensdauerprüfung nach DIN EN 61 373 werden Vibrationen auf das Lagerelement und/oder das Bremsgestänge und/oder die Bremsbrücke übertragen und die Beschleunigungsdichteantwort des Bremsgestänges, insbesondere der Bremsbrücke, durch an dem Bremsgestänge angeordneten Sensoren aufgenommen. Mittels der Sensoren wird dann die Beschleunigungsdichteantwort des Bremsgestänges über vorbestimmte gemessene Frequenzen des Bremsgestänges, beispielsweise 0 Hz bis 250 Hz, in Einheiten einer Leistungsdichte aufgetragen. Dabei kann vorgesehen sein, dass insbesondere in einem Frequenzbereich von 10 bis 100 Hz des gemessenen Frequenzspektrums des Bremsgestänges, insbesondere über mindestens 50 %, weiter mindestens 60 %, weiter bevorzugt mindestens 80 %, insbesondere bevorzugt mindestens 90 %, das Leistungsdichtespektrum unterhalb von 20.000 (m/s²)²/Hz, bevorzugt unterhalb von 10.000 (m/s²)²/Hz, weiter bevorzugt unterhalb von 9.000 (m/s²)²/Hz liegt.

Weiter bevorzugt ist vorgesehen, dass das Lagerelement eine Länge von 30 mm bis 200 mm, bevorzugt von 50 mm bis 100 mm, insbesondere bevorzugt von 50 mm bis 60 mm, und/oder einen Außendurchmesser von 30 mm bis 100 mm, bevorzugt von 40 mm bis 70 mm, insbesondere bevorzugt von 50 mm bis 65 mm, und/oder einen Innendurchmesser von 25 mm bis 90 mm, bevorzugt von 35 mm bis 75 mm, insbesondere bevorzugt von 50 mm bis 55 mm, und/oder eine Wanddicke von 1 mm bis 6 mm, bevorzugt von 2 mm bis 5 mm, insbesondere bevorzugt von 3 mm bis 4 mm, ganz besonders bevorzugt von 3,5mm, aufweist.

Mit Weiter bevorzugt ist vorgesehen, dass das Lagerelement eine Länge von 30 mm bis 200 mm, bevorzugt von 50 mm bis 100 mm, insbesondere bevorzugt von 50 mm bis 60 mm, ganz besonders bevorzugt von 57 mm, und/oder einen Außendurchmesser von 30 mm bis 100 mm, bevorzugt von 40 mm bis 70 mm, insbesondere bevorzugt von 50 mm bis 65 mm, ganz besonders bevorzugt von 60 mm, und/oder einen Innendurchmesser von 25 mm bis 90 mm, bevorzugt von 35 mm bis 75 mm, insbesondere bevorzugt von 50 mm bis 55 mm, ganz besonders bevorzugt von 53 mm, und/oder eine Wanddicke von 1 mm bis 6 mm, bevorzugt von 2 mm bis 5 mm, insbesondere bevorzugt von 3 mm bis 4 mm, ganz besonders bevorzugt von 3,5mm, aufweist. Die Toleranzen können zwischen 0,1 und 0,2 mm betragen, besonders bevorzugt ist die Toleranz 0,15 mm.

Zudem kann vorgesehen sein, dass ein Lagerendelement, insbesondere eine Lagerscheibe, weiter insbesondere ein Spacer, vorgesehen ist.

Das Lagerendelement, insbesondere die Lagerscheibe, dient dazu einer Relaxation des einen Kunststoff aufweisenden oder aus einem Kunststoff bestehenden Lagerelementes entgegenzuwirken. Ist das Lagerelement als Lagerbuchse ausgebildet und in einem Loch wie einer Bohrung einer Bremsbrücke bündig abschließend angeordnet und ist ferner das Bremsgestänge über die Bremsbrücke und die Lagerbuchse gelagert, so kann es aufgrund der starken Belastungen im Betrieb zu einem seitlichen Herauspressen oder Herausfließen des Kunststoffes der Lagerbuchse aus der Bohrung in der Bremsbrücke kommen.

Aus diesem Grunde kann ein Lagerendelement wie eine Lagerscheibe oder insbesondere ein Spacer endseitig auf der mit der Bremsbrücke bündig abschließenden Lagerbuchse angeordnet werden und es kann durch Einklemmen des Lagerendelementes zwischen der Bremsbrücke und dem Adapter beziehungsweise der Hängelasche des Drehgestells durch Druckbeaufschlagung ein Herausfließen oder Herauspressen des Kunststoffes der Lagerbuchse aus der Bohrung verhindert werden. Hierfür kann das Lagerendelement beziehungsweise die Lagerscheibe eine Innenöffnung aufweisen, durch welche die Enden der für die Lagerung verwendeten und in dem Lagerelement, insbesondere der Lagerbuchse, angeordneten Bolzen geführt sind.

Das Lagerendelement, insbesondere die Lagerscheibe kann einen Durchmesser von 40 mm bis 100 mm, bevorzugt von 50 mm bis 80 mm, besonders bevorzugt von 60 mm bis 80 mm, insbesondere bevorzugt von 70 mm aufweisen, und/oder einen Öffnungsdurchmesser der Innenöffnung von 20 mm bis 50 mm, bevorzugt von 25 mm bis 45 mm, besonders bevorzugt von 30 mm bis 40 mm, insbesondere von 35 mm, aufweisen. Das Lagerendelement, insbesondere die Lagerscheibe, kann zudem eine Dicke von 1 mm bis 5 mm, bevorzugt von 2 mm bis 4 mm, besonders bevorzugt von 2,5 mm bis 3mm aufweisen.

Ferner wird ein Lagerelement, insbesondere eine Lagerbuchse, für ein vorbeschriebenes Laufwerk vorgeschlagen, wobei das Lagerelement einen Kunststoff aufweist und/oder aus einem Kunststoff besteht, wobei der Kunststoff Polyoxymethylen (POM) ist.

### Kurze Beschreibung der Zeichnungen

Die Erfindung wird nachstehend anhand der Figuren näher erläutert. Es zeigen:
- Fig. 1: ein Bremsgestänge mit einer an einem Adapter gelagerten Bremsbrücke,
- Fig. 2: eine Bremsbrücke mit Lagerbuchsen,
- Fig. 3: ein Bremsgestänge mit Positionen für Sensoren,
- Fig. 4: eine Querschnittsansicht einer Lagerbuchse,
- Fig. 5: eine Aufsicht und eine Seitenansicht einer Lagerscheibe, und
- Fig. 6: ein stilisiertes Leistungsdichtespektrum.

### Ausführliche Beschreibung der Zeichnungen

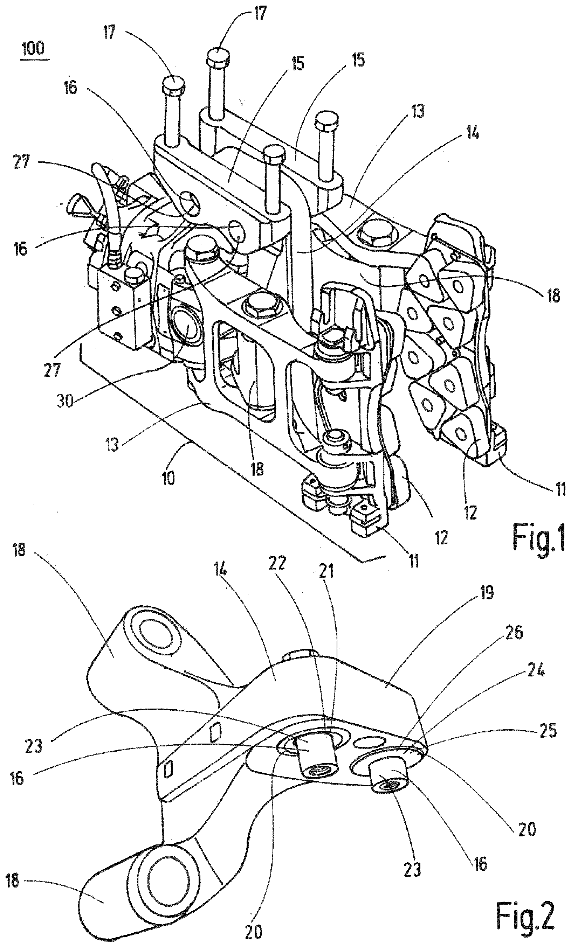

Fig. 1 zeigt ein Bremsgestänge 10 für ein Laufwerk 100 eines Schienenfahrzeuges. Das Bremsgestänge 10 umfasst Bremsbelaghalter 11, Bremsbeläge 12, Bremshebel 13 sowie eine Bremsbrücke 14. Ferner ist in der Fig. 1 ein Adapter 15 eines nicht weiter dargestellten Drehgestells gezeigt. Die Bremsbrücke 14 ist mittels Bolzen 16 mit dem Adapter 15 verbunden, wobei der Adapter 15 wiederum über Befestigungsschrauben 17 an dem Drehgestell angeordnet werden kann. Die Bremshebel 13 werden über einen Bremszylinder 30 betätigt.

In der Fig. 2 ist eine perspektivische Ansicht der Bremsbrücke 14 gezeigt. Die Bremsbrücke 14 weist zwei Arme 18 zur Befestigung der Bremshebel 13 auf. Ferner ist in einem oberen Bereich der Bremsbrücke 14 ein Verbindungsbereich 19 angeordnet. Der Verbindungsbereich 19 weist zwei durchgehende Bohrungen 20 auf. In jeder der durchgehenden Bohrungen 20 ist ein als Lagerbuchse 21 ausgebildetes Lagerelement 22 aus einem Kunststoff angeordnet. Zudem ist in der Lagerbuchse 21 ein als Bolzen 16 ausgebildetes Lagermittel 23 angeordnet. Die in Fig. 2 im rechten Bereich des Verbindungsbereichs 20 vorgesehene Lagerung 25 umfasst neben einer Lagerbuchse 21 und einem Bolzen 16 zusätzlich ein als Lagerscheibe 25 ausgebildetes Lagerendelement 26 aus einem Kunststoff. Zur Lagerung des Bremsgestänges 10 können die Bolzen 16, wie in Fig. 1 dargestellt, in Lageraufnahmen 27 des Adapters 15 angeordnet sein, wobei sich in den Lageraufnahmen 27 des Adapters 15 weitere Lagerbuchsen 21 befinden können. Darüber hinaus ist es auch möglich, dass die Bolzen 16 direkt mit dem Drehgestell verbunden sind oder an dem Drehgestell gelagert sind. Ferner ist es auch möglich, dass die Bolzen 16 endseitig in Hängelaschen des Drehgestells angeordnet werden.

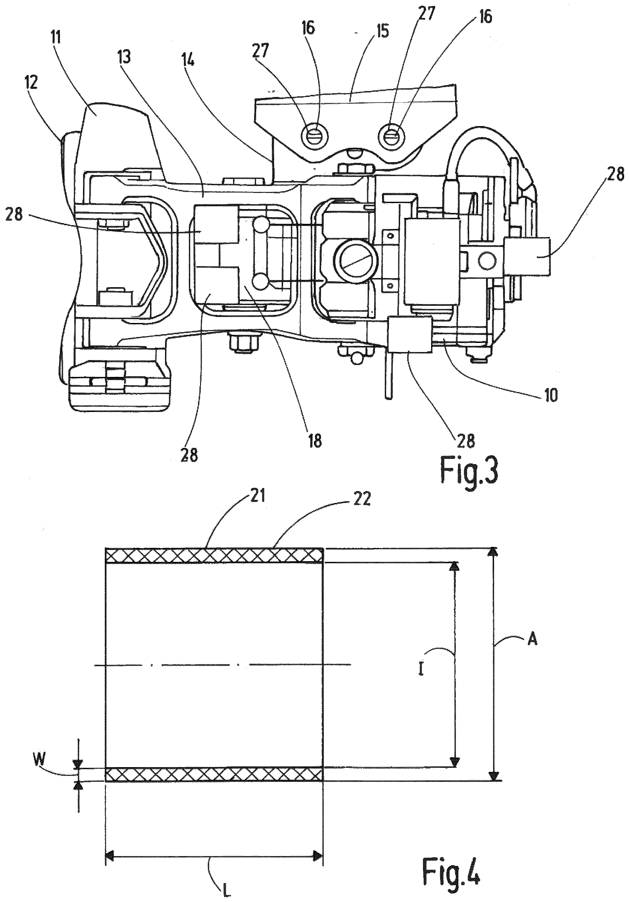

Die Fig. 3 zeigt eine Seitenansicht eines Bremsgestänges 10, wobei insbesondere die Positionen der Sensoren 28 zur Aufnahme einer Beschleunigungsdichteantwort gezeigt werden.

Fig. 4 zeigt einen Schnitt durch eine Mittelebene einer Lagerbuchse 21. Die Lagerbuchse 21 weist eine Länge L von 57 mm auf und einen Außendurchmesser A von 60 mm auf. Aufgrund einer Wanddicke W von 3,5 mm beträgt somit der Innendurchmesser I der Lagerbuchse 21 53 mm.

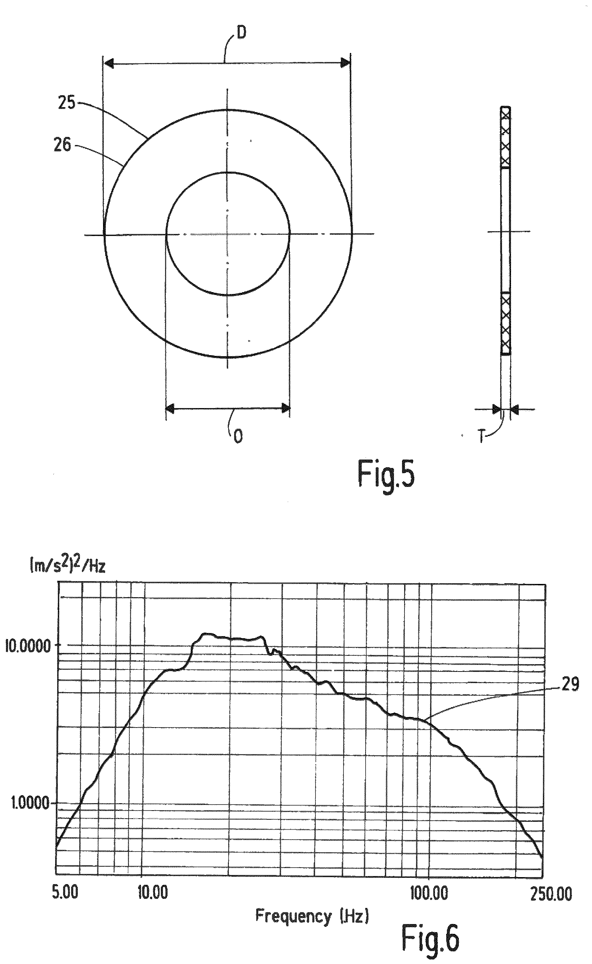

Fig. 5 zeigt eine Aufsicht auf ein als Lagerscheibe 25 ausgebildetes Lagerendelement 26. Die Lagerscheibe 25 hat einen Durchmesser D von 70 mm und einen Öffnungsdurchmesser O der Innenöffnung von 35 mm. Ferner hat die Lagerscheibe eine Dicke T von 2,5 mm.

Fig. 6 zeigt schließlich ein stilisiertes Leistungsdichtespektrum 29 einer mit den Sensoren 28 aufgenommenen Beschleunigungsdichteantwort. Auf der X-Achse ist die aufgenommene Frequenz von 5 bis 250 Hz aufgetragen, auf der Y-Achse ist die Leistungsdichte in Einheiten von (m/s²)²/Hz aufgetragen. Über mindestens 50 % des Frequenzbereichs von 10 bis 100 Hz verläuft das Leistungsdichtespektrum unter 10.000 (m/s²)²/Hz.

### Liste der Bezugszeichen

- 100: Laufwerk
- 10: Bremsgestänge
- 11: Bremsbelaghalter
- 12: Bremsbelag
- 13: Bremshebel
- 14: Bremsbrücke
- 15: Adapter
- 16: Bolzen
- 17: Befestigungsschraube
- 18: Arm
- 19: Verbindungsbereich
- 20: Bohrung
- 21: Lagerbuchse
- 22: Lagerelement
- 23: Lagermittel
- 24: Lagerung
- 25: Lagerscheibe
- 26: Lagerendelement
- 27: Lageraufnahme
- 28: Sensor
- 29: Leistungsdichtespektrum
- 30: Bremszylinder

- L: Länge
- A: Außendurchmesser
- I: Innendurchmesser
- W: Wanddicke
- D: Durchmesser
- O: Öffnungsdurchmesser
- T: Dicke

## Patentansprüche

1. Laufwerk (100) für ein Schienenfahrzeug umfassend ein Drehgestell und ein Bremsgestänge (10), mit mindestens einem Lagerelement (22), wobei das Bremsgestänge (10) eine Bremsbrücke (14) umfasst, wobei die Bremsbrücke (14) mittels des mindestens einen Lagerelements (22) an dem Drehgestell gelagert ist und/oder mit dem Drehgestell verbunden ist, wobei das mindestens eine Lagerelement (22) aus einem Kunststoff besteht, **dadurch gekennzeichnet, dass** der Kunststoff Polyoxymethylen (POM) ist, und/oder dass der Kunststoff ein selbstschmierender Kunststoff ist.

2. Laufwerk (100) nach Anspruch 1, **dadurch gekennzeichnet, dass** das mindestens eine Lagerelement (22) eine Lagerbuchse (21) ist.

3. Laufwerk (100) nach Anspruch 1 oder 2, **dadurch gekennzeichnet, dass** ein Lagermittel (23), insbesondere ein Bolzen (16), an dem Drehgestell angeordnet ist und/oder mit dem Drehgestell verbunden ist, und dass das Lagermittel (23) in dem Lagerelement (22) gelagert ist.

4. Laufwerk (100) nach einem der vorgenannten Ansprüche, **dadurch gekennzeichnet, dass** das mindestens eine Lagerelement (22) in der Bremsbrücke (14), besonders bevorzugt in einem Loch, insbesondere in einer Bohrung, der Bremsbrücke (14), angeordnet ist.

5. Laufwerk (100) nach einem der vorgenannten Ansprüche, **dadurch gekennzeichnet, dass** das Drehgestell einen Adapter (15) und/oder eine Hängelasche umfasst, wobei die Bremsbrücke (14) an dem Adapter (15) und/oder an der Hängelasche durch das Lagerelement (22) gelagert ist.

6. Laufwerk (100) nach einem der vorgenannten Ansprüche, **dadurch gekennzeichnet, dass** das Drehgestell von dem Bremsgestänge (10) mittels des mindestens einen Lagerelements (22) elektrisch isoliert ist, wobei das Lagerelement (22) bevorzugt eine Durchschlagsfestigkeit von mindestens 20 kV, weiter bevorzugt von mindestens 40 kV, insbesondere bevorzugt von mindestens 50 kV, weiter insbesondere bevorzugt von 60 kV, noch weiter bevorzugt von mindestens 80kV, ganz besonders bevorzugt von mindestens 100 kV, aufweist.

7. Laufwerk (100) nach einem der vorgenannten Ansprüche, **dadurch gekennzeichnet, dass** das Drehgestell gegenüber dem Bremsgestänge (10) mittels des mindestens einen Lagerelements (22) vibrationsgedämpft ist, wobei bevorzugt eine Lagereigenschaft des mindestens einen Lagerelements (22) derart ausgebildet ist, dass bei einer Lebensdauerprüfung nach DIN EN 61 373 eine Beschleunigungsdichteantwort des, insbesondere mit dem Lagerelement (22) gelagerten, Bremsgestänges (10) über mindestens 50%, bevorzugt mindestens 60%, weiter bevorzugt mindestens 80%, insbesondere bevorzugt mindestens 90%, des Frequenzbereichs von 10 Hz bis 100 Hz unterhalb von 20.000 (m/s²)²/Hz, bevorzugt unterhalb von 10.000 (m/s²)²/Hz, insbesondere bevorzugt unterhalb von 9.000 (m/s²)²/Hz liegt.

8. Laufwerk (100) nach einem der vorgenannten Ansprüche, **dadurch gekennzeichnet, dass** das Lagerelement (22) eine Länge (L) von 30 mm bis 200 mm, bevorzugt von 50 mm bis 100 mm, insbesondere bevorzugt von 50 mm bis 60 mm, und/oder einen Außendurchmesser (A) von 30 mm bis 100 mm, bevorzugt von 40 mm bis 70 mm, insbesondere bevorzugt von 50 mm bis 65 mm, und/oder einen Innendurchmesser (I) von 25 mm bis 90 mm, bevorzugt von 35 mm bis 75 mm, insbesondere bevorzugt von 50 mm bis 55 mm, und/oder eine Wanddicke (W) von 1 mm bis 6 mm, bevorzugt von 2 mm bis 5 mm, insbesondere bevorzugt von 3 mm bis 4 mm, ganz besonders bevorzugt von 3,5mm, aufweist.

9. Laufwerk (100) nach einem der vorgenannten Ansprüche, **dadurch gekennzeichnet, dass** eine Lagerendelement (26), insbesondere eine Lagerscheibe (25), weiter insbesondere ein Spacer, vorgesehen ist.

## Claims

1. Running gear (100) for a rail vehicle comprising a bogie and a brake linkage (10), with at least one bearing element (22), wherein the brake linkage (10) comprises a brake bridge (14), wherein the brake bridge (14) is mounted at the bogie by means of the at least one bearing element (22) and/or is connected to the bogie, wherein the at least one bearing element (22) consists of a plastic, **characterized in that** the plastic is polyoxymethylene (POM) and/or that the plastic is a self-lubricating plastic.

2. Running gear (100) according to claim 1, **characterized in that** the at least one bearing element (22) is a bearing bush (21).

3. Running gear (100) according to claim 1 or 2, **characterized in that** a bearing means (23), in particular a bolt (16), is arranged at the bogie and/or is connected to the bogie, and **in that** the bearing means (23) is mounted in the bearing element (22).

4. Running gear (100) according to one of the preceding claims, **characterized in that** the at least one bearing element (22) is arranged in the brake bridge (14), particularly preferably in a hole, in particular in a bore, of the brake bridge (14).

5. Running gear (100) according to one of the preceding claims, **characterized in that** the bogie comprises an adapter (15) and/or a hanging strap, wherein the brake bridge (14) is mounted at the adapter (15) and/or on the hanging strap by the bearing element (22).

6. Running gear (100) according to one of the preceding claims, **characterized in that** the bogie is electrically insulated from the brake linkage (10) by means of the at least one bearing element (22), wherein the bearing element (22) preferably has a dielectric strength of at least 20 kV, more preferably of at least 40 kV, particularly preferably of at least 50 kV, further particularly preferably of 60 kV, even further preferably of at least 80 kV, very particularly preferably of at least 100 kV.

7. Running gear (100) according to one of the preceding claims, **characterized in that** the bogie is vibration-damped relative to the brake linkage (10) by means of the at least one bearing element (22), wherein preferably a bearing property of the at least one bearing element (22) is configured in such a way that at a service life test according to DIN EN 61 373 an acceleration density response of the brake linkage (10), which is in particular mounted with the bearing element (22), over at least 50%, preferably at least 60%, more preferably at least 80%, particularly preferably at least 90%, of the frequency range of 10 Hz to 100 Hz is below 20,000 (m/s²)²/Hz, preferably below 10,000 (m/s²)²/Hz, particularly preferably below 9000 (m/s²)²/Hz.

8. Running gear (100) according to one of the preceding claims, **characterized in that** the bearing element (22) has a length (L) of 30 mm to 200 mm, preferably 50 mm to 100 mm, particularly preferably 50 mm to 60 mm, and/ or an outer diameter (A) of 30 mm to 100 mm, preferably 40 mm to 70 mm, particularly preferably 50 mm to 65 mm, and/or an inner diameter (I) of 25 mm to 90 mm, preferably 35 mm to 75 mm, particularly preferably 50 mm to 55 mm, and/or a wall thickness (W) of 1 mm to 6 mm, preferably 2 mm to 5 mm, particularly preferably 3 mm to 4 mm, very particularly preferably 3, 5_mm.

9. Running gear (100) according to one of the preceding claims, **characterized in that** a bearing end element (26), in particular a bearing disc (25), further in particular a spacer, is provided.

## Revendications

1. Ensemble roulant (100) pour un véhicule ferroviaire comprenant un bogie et une timonerie de frein (10), avec au moins un élément de support (22), sachant que la timonerie de frein (10) comprend un pont de frein (14), sachant que le pont de frein (14) est logé sur le bogie au moyen de l'au moins un élément de support (22) et/ou est relié au bogie, sachant que l'au moins un élément de support (22) est composé d'une matière plastique, **caractérisé en ce que** la matière plastique est du polyoxyméthylène (POM) et/ou **en ce que** la matière plastique est une matière plastique autolubrifiante.

2. Ensemble roulant (100) selon la revendication 1, **caractérisé en ce que** l'au moins un élément de support (22) est un coussinet (21).

3. Ensemble roulant (100) selon la revendication 1 ou 2, **caractérisé en ce qu'**un moyen de support (23), en particulier un boulon (16), est disposé sur le bogie et/ou est relié au bogie et **en ce que** le moyen de support (23) est logé dans l'élément de support (22).

4. Ensemble roulant (100) selon l'une quelconque des revendications précédentes, **caractérisé en ce que** l'au moins un moyen de support (22), est disposé dans le pont de frein (14), en particulier de préférence dans un trou, en particulier dans un alésage, du pont de frein (14).

5. Ensemble roulant (100) selon l'une quelconque des revendications précédentes, **caractérisé en ce que** le bogie comprend un adaptateur (15) et/ou une attache de suspension, sachant que le pont de frein (14) est logé sur l'adaptateur (15) et/ou sur l'attache de suspension à travers l'élément de support (22).

6. Ensemble roulant (100) selon l'une des revendications précédentes, **caractérisé en ce que** le bogie est électriquement isolé de la timonerie de frein (10) au moyen de l'au moins un élément de support (22), sachant que l'élément de support (22) comporte de préférence une résistance à la décharge disruptive d'au moins 20 kV, de préférence en plus d'au moins 40 kV, en particulier de préférence d'au moins 50 kV, en particulier en plus de préférence de 60 kV, de façon encore plus préférée d'au moins 80 kV, tout particulièrement de préférence d'au moins 100 kV.

7. Ensemble roulant (100) selon l'une des revendications précédentes, **caractérisé en ce que** le bogie est amorti en vibrations par rapport à la timonerie de frein (10) au moyen de l'au moins un élément de support (22), sachant de préférence qu'une aptitude de support de l'au moins un élément de support (22) est constituée de telle manière que lors d'un essai de durabilité selon la DIN EN 61 373, une réponse à l'intensité d'accélération de la timonerie de frein (10) supportée en particulier avec l'élément de support (22) se situe au-dessus d'au moins 50 %, de préférence à au moins 60 %, de façon plus préférée à au moins 80 %, en particulier de préférence à au moins 90 % de la plage de fréquences de 10 Hz à 100 Hz en dessous de 20 000 (m/s²)²/Hz, de préférence en dessous de 10 000(m/s²)²/Hz, en particulier de préférence en dessous de 9 000 (m/s²)²/Hz.

8. Ensemble roulant (100) selon l'une des revendications précédentes, **caractérisé en ce que** l'élément de support (22) comporte une longueur (L) de 30 mm à 200 mm, de préférence 50 mm à 100 mm, en particulier de préférence de 50 mm à 60 mm, et/ou un diamètre extérieur (A) de 30 mm à 100 mm, de préférence de 40 mm à 70 mm, en particulier de préférence de 50 mm à 65 mm et/ou un diamètre intérieur (I) de 25 mm à 90 mm, de préférence de 35 mm à 75 mm, en particulier de préférence de 50 mm à 55 mm et/ou une épaisseur de paroi (W) de 1 mm à 6 mm, de préférence de 2 mm à 5 mm, en particulier de préférence de 3 mm à 4 mm, tout particulièrement de préférence de 3,5 mm.

9. Ensemble roulant (100) selon l'une des revendications précédentes, **caractérisé en ce qu'**un élément d'extrémité de support (26), en particulier un disque d'appui (25), en particulier encore une entretoise, est prévu.
